# EUROPÄISCHE PATENTSCHRIFT

(11) **EP 1 412 908 B1**
(45) Veröffentlichungstag und Bekanntmachung des Hinweises auf die Patenterteilung: **22.06.2005**
(21) Anmeldenummer: 02754407.1
(22) Anmeldetag: 22.07.2002
(51) Int. Cl.: G06K 7/12, G06K 7/10

(54) **VERFAHREN UND VORRICHTUNG ZUM IDENTIFIZIEREN EINER MARKIERUNG UNTER VERWENDUNG EINES DETEKTORSTOFFS**
METHOD AND DEVICE FOR IDENTIFYING A MARKER USING A DETECTOR SUBSTANCE
PROCEDE ET DISPOSITIF POUR IDENTIFIER UN MARQUAGE EN UTILISANT UNE SUBSTANCE DE DETECTION

(30) Priorität: 03.08.2001 DE 10137484
(43) Veröffentlichungstag der Anmeldung: 28.04.2004
(73) Patentinhaber: SIEMENS AKTIENGESELLSCHAFT, 80333 München (DE)
(72) Erfinder: KAISER, Joachim, 91056 Erlangen (DE)
(86) Internationale Anmeldenummer: PCT/DE2002/002691
(87) Internationale Veröffentlichungsnummer: WO 2003/015009

(56) Entgegenhaltungen:
- WO-A-98/00806
- WO-A-99/47702
- DE-A- 19 958 048
- US-A- 4 983 817

## Beschreibung

Die Erfindung betrifft ein Verfahren und eine Vorrichtung zum Identifizieren einer an einem Körper angeordneten Markierung, die einen Markierungsstoff mit spezifischer Eigenschaft enthält.

Ein derartiges Verfahren und eine derartige Vorrichtung sind aus der *WO 99*/*47702 A2* bekannt. Der Markierungsstoff wird bei diesem bekannten Verfahren und dieser bekannten Vorrichtung mit einem Detektorstoff, der eine zum Markierungsstoff korrespondierende spezifische Eigenschaft hat, in Kontakt gebracht. Der Markierungs- und der Detektorstoff sind jeweils als Nukleotidsequenz insbesondere als eine Desoxyribonukleinsäure (= DNA) oder eine Peptid-Nukleinsäure (= PNA) ausgebildet. Werden beide aufeinander abgestimmte Nukleotidsequenzen in bestimmter Weise in Kontakt miteinander gebracht, erfolgt eine Hybridisierung. Die Nukleotidsequenz des Detektorstoffes ist außerdem mit mindestens einem fluorophoren Molekül verbunden. Durch zusätzlich vorgesehene Maßnahmen entfaltet dieses Molekül seine fluoreszierende Eigenschaft erst nach einer Hybridisierung mit der Nukleotidsequenz des Markierungsstoffs. Durch Bestrahlung mit einem Lichtsignal entsprechender Wellenlänge kann dann eine Fluoreszenzreaktion hervorgerufen werden, die zur Identifizierung der Markierung herangezogen wird.

In der WO 99/47702 A2 werden keine Angaben darüber gemacht, wie die Fluoreszenzreaktion genau detektiert werden kann. Die empfangene Lichtstrahlung setzt sich nämlich aus einem ersten Anteil, der auf die Fluoreszenzreaktion der hybridisierten Markierung zurückgeht, und einem zweiten Anteil, der durch Reflektion an der Markierung und vor allem am Markierungs-Untergrund entsteht, zusammen. Da sich nur der Fluoreszenz-Anteil zur Markierungs-Identifizierung verwenden lässt, ist eine Separierung dieses Anteils erforderlich. Die WO 99/47702 A2 liefert hierzu aber keine Informationen. Im ungünstigsten Fall lassen sich beide Strahlungsanteile nicht trennen und es ist keine Identifizierung möglich.

Aus der *WO 97*/*50053 A2* ist eine als sogenannter Fluoreszenzspiegelscanner ausgebildete Vorrichtung zur Detektion einer unsichtbaren, im nahen infraroten Wellenlängenbereich fluoreszierenden Markierung bekannt. Um den in der empfangenen Strahlung vom Untergrund stammenden Anteil von dem durch die Fluoreszenzreaktion hervorgerufenen Anteil trennen zu können, ist bei der offenbarten Vorrichtung entweder eine Nachführung der Strahlungsquellenleistung oder ein spezielles Untergrund-Material vorgesehen. Die Leistungsnachführung erfolgt so, dass der in der empfangenen Strahlung vom Untergrund herrührende Anteil konstant gehalten wird. Aufgrund der Leistungsnachführung ist jedoch ein relativ komplizierter Aufbau mit einer Regelungseinheit erforderlich. Auch die ansonsten zum Aufbau des Fluoreszenzspiegelscanners verwendeten Komponenten sind aufwändig. Außerdem ist die beschriebene Vorrichtung nicht ohne weiteres transportabel und kann insbesondere auch nicht als Handgerät verwendet werden.

Dies gilt ebenso für eine andere, in der *US 5,331,140* beschriebene Vorrichtung zur Detektion einer unsichtbaren fluoreszierenden Markierung. Zur Separierung des durch die Fluoreszenz hervorgerufenen Anteils in der empfangenen Strahlung wird die zur Anregung verwendete Strahlung mit zwei Frequenzen moduliert. Aus dem aus der empfangenen Strahlung abgeleiteten elektrischen Signal wird ein Intermodulationsanteil dieser beiden Frequenzen extrahiert. Das Intermodulationsprodukt entsteht durch ein nichtlineares Verhalten, das mit der Fluoreszenzreaktion einhergeht. Die Frequenzmodulation und die Separierung des Intermodulationsprodukts sind mit einem nicht unerheblichen Aufwand verbunden. Außerdem werden auch andere komplizierte Komponenten eingesetzt, wie beispielsweise der verstellbare Umlenkspiegel, der die anregende Strahlung auf die verschiedenen Bereiche der Markierung richtet.

In der *JP 11-306276 A* wird eine Vorrichtung zur Identifizierung einer Markierung, die fluoreszierendes Material enthält, beschrieben. Die Vorrichtung ist in Form eines Handgeräts ausgestaltet. Zur Separierung von Untergrundstrahlung und der Fluoreszenzstrahlung in der empfangenen Strahlung wird ein teueres optisches Filter verwendet. Außerdem ist die Vorrichtung genau wie alle anderen vorstehend genannten nur zur Detektion einer bereits vor Beginn der Messung fluoreszierenden Markierung geeignet.

Die Aufgabe der Erfindung besteht deshalb darin, ein Verfahren und eine Vorrichtung zum Identifizieren einer an einem Körper angeordneten Markierung, die einen Markierungsstoff mit spezifischer Eigenschaft enthält, anzugeben, die einfach und schnell funktionieren und im Aufbau ohne aufwändige Komponenten auskommen. Insbesondere soll die Vorrichtung auch in Gestalt eines tragbaren Handgeräts zu realisieren sein.

Zur Lösung der das Verfahren betreffenden Aufgabe wird ein Verfahren entsprechend den Merkmalen des unabhängigen Patentanspruchs 1 angegeben.

Bei dem erfindungsgemäßen Verfahren zur Identifizierung einer an einem Körper angeordneten Markierung, die einen Markierungsstoff mit spezifischer Eigenschaft enthält, handelt es sich um ein Verfahren, bei welchem
a) die Markierung in einer ersten Messung mittels einer Strahlung abgetastet und daraus eine Referenz ermittelt wird,
b) der Markierungsstoff mit einem Detektorstoff mit zum Markierungsstoff korrespondierender spezifischer Eigenschaft in Kontakt gebracht wird, so dass eine aufgrund der korrespondierenden spezifischen Eigenschaften resultierende Verbindung aus Markierungs- und Detektorstoff fluoreszierendes Verhalten aufweist,
c) die Markierung in einer zweiten Messung mittels der Strahlung abgetastet wird und
d) die Markierung mittels der Referenz und dem Ergebnis der zweiten Messung identifiziert wird.

Zur Lösung der die Vorrichtung betreffenden Aufgabe wird eine Vorrichtung entsprechend den Merkmalen des unabhängigen Patentanspruchs 14 angegeben.

Bei der erfindungsgemäßen Vorrichtung zum Identifizieren einer an einem Körper angeordneten Markierung, die einen Markierungsstoff mit spezifischer Eigenschaft enthält, handelt es sich um eine Vorrichtung, welche mindestens
a) eine Abtasteinheit zur Messung der Markierung mittels einer Strahlung,
b) eine mit einem Detektorstoff befüllbare Dosiereinheit, die ausgelegt ist, den Detektorstoff in Kontakt mit dem Markierungsstoff zu bringen, wobei der Detektorstoff eine zum Markierungsstoff korrespondierende spezifische Eigenschaft hat und eine aufgrund der korrespondierenden spezifischen Eigenschaften resultierende Verbindung aus Markierungs- und Detektorstoff fluoreszierendes Verhalten aufweist, und
c) eine Steuer- und Auswerteeinheit umfasst,
   wobei die Abtasteinheit, die Dosiereinheit und die Steuer- und Auswerteeinheit ausgelegt sind zur sequentiellen Durchführung
d) einer ersten Messung der Markierung sowie einer daraus abgeleiteten Ermittlung einer Referenz,
e) des Inkontaktbringens von Markierungsstoff und Detektorstoff,
f) einer zweiten Messung der Markierung und
g) einer Identifizierung der Markierung anhand der Referenz und des Ergebnisses der zweiten Messung.

Die Erfindung beruht dabei auf der Erkenntnis, dass durch die vorgeschaltete erste Messung zur Aufnahme einer Referenz für die Untergrundstrahlung mit einfachen Mitteln eine Trennung des Anteils der Untergrundstrahlung von dem der Fluoreszenzstrahlung möglich ist. Nach Aufbringen des Detektorstoffes enthält die im Rahmen der zweiten Messung empfangene Strahlung nämlich aufgrund des fluoreszierenden Verhaltens der Verbindung aus Markierungs- und Detektorstoff neben dem Untergrundstrahlungsanteil auch einen Anteil an Fluoreszenzstrahlung. Das Ergebnis der ersten (Referenz-)Messung wird nun dazu verwendet, den Anteil der Untergrundstrahlung aus dem Ergebnis der zweiten Messung zu eliminieren, so dass danach im Wesentlichen nur der interessierende Anteil, der durch die Fluoreszenzreaktion der Markierung hervorgerufen worden ist, vorliegt. Damit lässt sich die Markierung identifizieren.

Der Markierungsstoff hat vor der Verbindung mit dem Detektorstoff vorzugsweise kein oder kein nennenswertes eigenes fluoreszierendes Verhalten. Jedenfalls ist die eigene Fluoreszenz nicht signifikant im Vergleich zur der, die nach' der Verbindung mit dem Detektorstoff vorliegt. Genau wie der übrige Untergrund kann der Markierungsstoff jedoch eine geringe, beispielsweise eine natürliche Fluoreszenz aufweisen. Diese gegebenenfalls vorhandene geringe Fluoreszenz der Markierung und des Untergrunds wird aber über die Referenzmessung erfasst und kann bei der Auswertung der zweiten Messung mit berücksichtigt werden.

Die Ermittlung einer Referenz für die Untergrundstrahlung ist insbesondere deshalb möglich, da die Markierung vor Aufbringen des Detektorstoffs noch kein oder nur ein unwesentliches fluoreszierendes Verhalten aufweist. Diese besonders vorteilhafte Möglichkeit zur Ermittlung einer Referenz für die Untergrundstrahlung ist bei den Verfahren und Vorrichtungen des Stands der Technik nicht gegeben, da dort mit Markierungen gearbeitet wird, die bereits von Anfang an fluoreszierendes Verhalten aufweisen.

Dank der sequentiellen Vornahme von Referenzmessung, Zuführung des Detektorstoffs und zweiter Messung lässt sich mit dem erfindungsgemäßen Verfahren und der erfindungsgemäßen Vorrichtung die Markierung in besonders einfacher Weise identifizieren. Die Ermittlung der Referenz kann mit den gleichen Komponenten erfolgen, die auch für die eigentliche Messung ohnehin vorzusehen sind. Die Berücksichtigung der Referenzmessung erfolgt dabei insbesondere auf der Ebene der aus der empfangenen Strahlung abgeleiteten elektrischen Signale. Vorzugsweise geschieht dies nach einer vorherigen Digitalisierung innerhalb einer elektronischen Recheneinheit, die beispielsweise Bestandteil der Steuer- und Auswerteeinheit ist. Damit ist trotz zusätzlicher Referenzmessung und Berücksichtigung der ermittelten Referenz bei der Auswertung der zweiten Messung eine sehr schnelle Identifizierung der Markierung möglich.

Vorteilhafte Ausgestaltungen des Verfahrens und der Vorrichtung ergeben sich aus den von Anspruch 1 bzw. 14 abhängigen Ansprüchen. Wenn im Folgenden Vorteile explizit nur für eine Verfahrens- oder eine Vorrichtungsausgestaltung angegeben sind, gelten diese in analoger Weise für die jeweils korrespondierende Vorrichtungs- bzw. Verfahrensausgestaltung.

Günstig ist eine Ausgestaltung, bei der die erste Messung (= Referenzmessung), der Schritt, bei dem der Detektorstoff mit dem Markierungsstoff in Kontakt gebracht wird, und die zweite Messung in unmittelbarer zeitlicher Abfolge durchgeführt werden. Dadurch wird sichergestellt, dass sich die Umgebungsbedingungen und insbesondere das Untergrundverhalten zwischen der Referenzmessung und der zweiten Messung nicht ändern. Man erhält somit ein besseres Identifizierungsergebnis. Außerdem wird dadurch auch eine sehr rasche Identifizierung erreicht. Außerdem wird durch das unmittelbar vor der zweiten Messung erfolgende Aufbringen des Detektorstoffs ein Zerfall der Verbindung aus Markierungs- und Detektorstoff noch vor der Durchführung der zweiten Messung praktisch ausgeschlossen.

Vorteilhaft ist eine weitere Ausführungsform, bei der eine zur Identifizierung verwendete Vorrichtung über die Markierung hinweg bewegt wird. Die Bewegung kann insbesondere auch von Hand erfolgen. Außerdem ist es vorzugsweise auch möglich, die verwendete Vorrichtung in einer Hinrichtung und im Anschluss daran in einer Rückrichtung über die Markierung hinweg zu bewegen. Durch die Bewegung über die Markierung hinweg erübrigt sich die beim Stand der Technik üblicherweise verwendete aufwändige Mimik zur Abtastung der Markierung mittels der Strahlung. Durch die Bewegung der gesamten Vorrichtung erfasst die zur Abtastung der Markierung emittierte Strahlung alle relevanten Teile der Markierung, ohne dass hierfür eine gesonderte Mimik erforderlich ist. Dadurch ergibt sich eine besonders einfache Ausgestaltung der Vorrichtung und des Verfahrens. Günstig ist es außerdem, wenn die Vorrichtung während der Bewegung über die Markierung hinweg in direktem Kontakt mit der Markierung steht. Dadurch werden Schwankungen im Ergebnis aufgrund eines unterschiedlichen Abstands zur Markierung verhindert, auch wenn die Bewegung von Hand ausgeführt wird. Darüber hinaus lässt sich durch den direkten Kontakt zwischen der eingesetzten Vorrichtung und der Markierung auch die Einkopplung von unerwünschter Streustrahlung reduzieren oder sogar komplett verhindern.

Bei einer weiteren vorteilhaften Ausführungsform wird während der Bewegung über die Markierung hinweg die Position erfasst und in der Auswertung mit berücksichtigt. Dadurch lassen sich Schwankungen in der Bewegungsgeschwindigkeit berücksichtigen, die ansonsten zu einer Ergebnisverfälschung führen könnten.

Günstig ist weiterhin eine Ausführungsform, bei der die Bewegung über die Markierung hinweg mittels eines Rollens einer Walze über die Markierung hinweg erfolgt. Günstigerweise wird diese Walze zugleich auch für eine Zuführung des Detektorstoffs zur Markierung und damit zum Markierungsstoff verwendet. Außerdem bewirkt die Walze eine Konstanthaltung des Abstands zwischen der Markierung und der Abtasteinheit, wodurch eine hohe Messgenauigkeit erreicht wird. Die Walze erfüllt also mehrere Funktionen gleichzeitig.

Bei einer anderen bevorzugten Variante, wird das Ergebnis der ersten Messung außer zur Referenzermittlung zusätzlich zur Auswertung des fluoreszierenden Verhaltens der Markierung herangezogen. Diese Auswertung liefert also eine Aussage darüber, ob die Markierung bereits vor der Zuführung des Detektorstoffs eine signifikante Fluoreszenz aufweist. Sollte dies der Fall sein, kann dies ein wichtiger Hinweis auf einen Fälschungsversuch oder auf einen nicht autorisierten Identifizierungsversuch sein.

Eine weitere Ausgestaltung zeichnet sich dadurch aus, dass die zur Anregung der Fluoreszenz auf die Markierung gerichtete Strahlung als Strahlungsmuster vorliegt. Mögliche Muster sind hierbei ein Linienmuster oder ein Punktmuster vorzugsweise mit jeweils einem länglichen Umriss. Dies ist insbesondere bei einer als Handgerät ausgebildeten Vorrichtung günstig. Die manuelle Bewegung der Vorrichtung über die Markierung hinweg erfolgt in aller Regel nicht exakt gleichmäßig. Bei Anregung der fluoreszierenden Strahlung mittels eines Lichtmusters mit einer größeren lokalen und insbesondere auch länglichen Ausdehnung fallen derartige Schwankungen bei der Bewegung über die Markierung hinweg nicht ins Gewicht. Die beim Stand der Technik vorgesehene Anregung mittels eines einzigen und außerdem sehr kleinen Lichtpunkts weist diesen Vorteil dagegen nicht auf.

Bevorzugte Ausführungsbeispiele werden nunmehr anhand der Zeichnung näher erläutert. Zur Verdeutlichung ist die Zeichnung nicht maßstäblich ausgeführt, und gewisse Merkmale sind nur schematisiert dargestellt. Im einzelnen zeigen:
- Figur 1: eine Vorrichtung zum Identifizieren einer Markierung in Form eines Handgeräts,
- Figur 2: eine Markierung auf einem Hintergrundmuster
- Figur 3: eine in der Vorrichtung gemäß Figur 1 eingesetzte Abtasteinheit,
- Figuren 4 und 5: Wellenleiteranordnung der Abtasteinheit von Figur 4 in Seitenansicht und
- Figur 6: Anordnungen von zu- und abführenden Wellenleitern in der Abtasteinheit gemäß Figur 3.

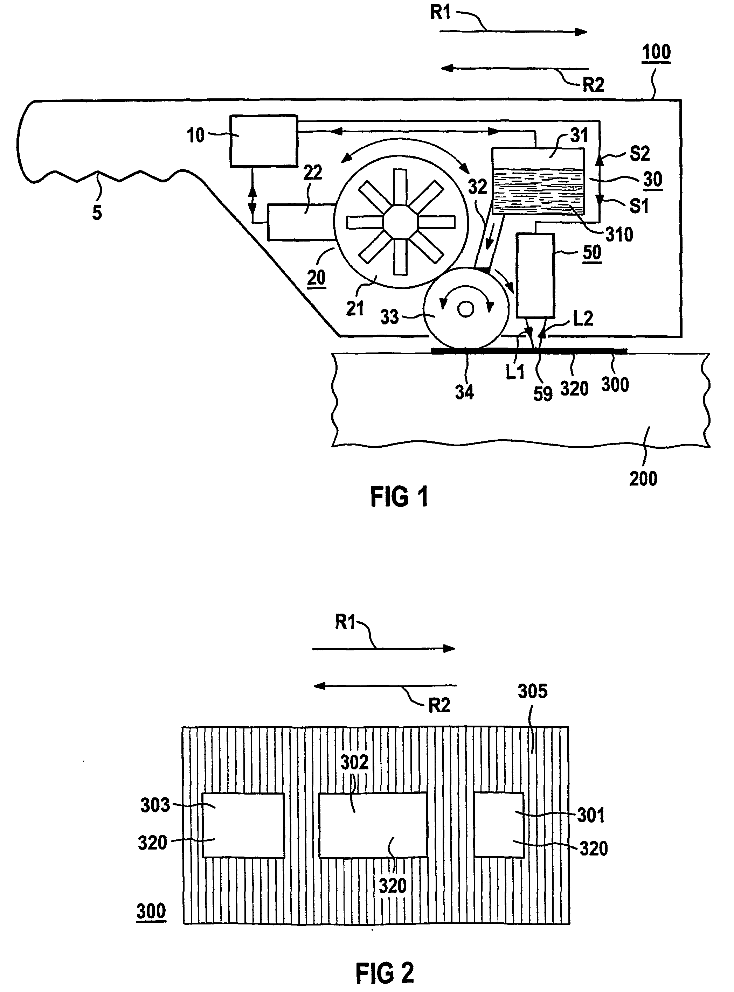

Einander entsprechende Teile sind in den Figuren 1 bis 6 mit denselben Bezugszeichen versehen.

In Figur 1 ist eine Vorrichtung 100 zum Identifizieren einer Markierung 300 an einem Körper 200 dargestellt. Der Körper 200 kann eine beliebige Gestalt annehmen, beispielsweise eine Verpackung, ein Dokument oder ein anderes Produkt, das gekennzeichnet werden soll. Die Markierung 300 enthält einen Markierungsstoff 320, der eine spezifische Eigenschaft aufweist. Der Markierungsstoff 320 ist im gezeigten Ausführungsbeispiel als Nukleotidsequenz, beispielsweise als Desoxyribonukleinsäure (= DNA) oder als Peptid-Nukleinsäure (= PNA) ausgebildet. Insbesondere ist die Markierung 300 für das menschliche Auge nicht sichtbar. Dadurch wird erreicht, dass der zufällige Betrachter keine Kenntnis von der Markierung erlangen kann. Dies ist unter anderem im Bereich des Schutzes vor Produktpiraterie von Interesse.

Die in Figur 1 gezeigte Vorrichtung 100 ist als Handgerät ausgebildet, um eine möglichst einfache, schnelle und auch flexibel einsetzbare Identifizierung der Markierung 300 zu ermöglichen, selbst wenn sich die Markierung 300 an einer sehr abgelegenen und gegebenenfalls auch unzugänglichen Stelle befindet.

Die mit dem Markierungsstoff 320 gebildete Markierung 300 ist zunächst ohne weitere Vorbehandlung auch mittels einer optischen Abtastung gleichgültig welcher Wellenlänge nicht zu detektieren. Zur Identifizierung der Markierung 300 enthält die Vorrichtung 100 deswegen eine Dosiereinheit 30, mittels der ein Detektorstoff 310 der Markierung 300 zugeführt und mit dem Markierungsstoff 320 in Kontakt gebracht werden kann. Der Detektorstoff 310 hat ebenfalls eine spezifische Eigenschaft die gerade mit derjenigen des Markierungsstoffs 310 korrespondiert. Auch bei dem Detektorstoff 310 handelt es sich um eine Nukleotidsequenz, im vorliegenden Fall um eine PNA. Bei richtiger Wahl des Markierungs- und des Detektorstoffs 320 bzw. 310 mit zueinander korrespondierenden spezifischen Eigenschaften kommt es zu einer Verbindung (= Hybridisierung) der beiden Nukleotidsequenzen, nachdem die beiden Stoffe 310 und 320 in Kontakt miteinander gebracht worden sind. Die Verwendung von PNA für die Stoffe 310 und 320 ist insbesondere deshalb günstig, da dann nach der Hybridisierung eine besonders stabile und temperaturbeständige Verbindung vorliegt.

Der Detektorstoff 310 enthält zusätzlich einen fluorophoren Bestandteil, der jedoch im nichthybridisierten Zustand der PNA des Detektorstoffes 310 durch eine zusätzliche Maßnahme deaktiviert ist. Dies bedeutet, dass er kein fluoreszierendes Verhalten aufweist. Nach der Hybridisierung mit der PNA des Markierungsstoffes 320 ist die Deaktivierung des fluorophoren Elements aufgehoben und es zeigt sein fluoreszierendes Verhalten, das optisch angeregt und detektiert werden kann. In der WO 99/47702 A2 sind verschiedene Ausführungsformen für die eingesetzten Nukleotidsequenzen sowie für die Anbindung eines fluorophoren Moleküls an den Detektorstoff 310 angegeben. Im gezeigten Beispiel von Figur 1 wird Fluorescin oder Cy 5 als fluorophores Element eingesetzt. Fluorescin kann dabei mittels einer Lichtstrahlung im Wellenlängenbereich um 470 nm, Cy 5 dagegen mittels einer Lichtstrahlung im Wellenlängenbereich um 640 nm zur Fluoreszenz angeregt werden. Die von Cy 5 emittierte Fluoreszenzstrahlung liegt dann in einem Wellenlängenbereich um 670 nm.

Zur Identifizierung wird die Vorrichtung 100 von Hand über die Markierung 300 hinweg bewegt. Bei dieser Bewegung wird der Detektorstoff 310 auf die Markierung 300 aufgebracht. Die hierfür vorgesehene Dosiereinheit 30 enthält dazu einen Behälter 31, eine Zuführung 32 und eine Walze 33. In dem Behälter 31 befindet sich ein Vorrat des Detektorstoffes 310, der im gezeigten Ausführungsbeispiel in wässriger Lösung vorliegt. Andere Ausführungsformen sind jedoch ebenfalls denkbar. Über die Zuführung 32 gelangt der Detektorstoff 310 auf die Walze 33, die sich bei der Bewegung der Vorrichtung 100 über die Markierung 300 hinweg dreht und damit den Detektorstoff 310 gleichmäßig auf der Markierung 300 verteilt. Die Zuführung des Detektorstoffs 310 zur Markierung 300 lässt sich prinzipiell auch auf andere Art und Weise vornehmen. Eine denkbare Alternative besteht in der Verwendung einer gegebenenfalls in ihrer Abgabemenge steuerbaren Pipette.

Die im Ausführungsbeispiel von Figur 1 zur Zuführung des Detektorstoffs 310 verwendete Walze 33 steht in unmittelbarem Kontakt mit der Markierung 300. Dies hat den Vorteil, dass sich auch die übrigen Bestandteile der Vorrichtung 100 während des Identifizierungsvorgangs jeweils in etwa demselben Abstand zur Markierung 300 befinden. Damit liegen während des gesamten Identifizierungsvorgangs praktisch gleiche Bedingungen für eine optische Abtastung der Markierung 300 vor. Anhand der Lagerung der Walze 33 in der Vorrichtung 100 kann der Abstand zwischen der Markierung 300 und den übrigen Bestandteilen der Vorrichtung 100 eingestellt werden. Hierbei ist ein möglichst geringer Abstand besonders vorteilhaft, um eine im Zusammenhang mit der optischen Abtastung unerwünschte Streulichteinkopplung zu verringern.

Die Vorrichtung 100 weist einen Handgriff 5 auf, an dem sie in einer Hinrichtung R1 und in einer Rückrichtung R2 über die Markierung 300 hin und her bewegt werden kann. Mittels einer Abtasteinheit 50 wird ein Sendelichtsignal L1 auf die Markierung 300 gerichtet. Ein von dort zurückgestrahltes Empfangslichtsignal L2 wird von der Abtasteinheit 50 empfangen und nach einer optoelektrischen Wandlung als Empfangssignal S2 an eine Steuer- und Auswerteeinheit 10 weitergeleitet. Die Steuer- und Auswerteeinheit 10 steuert neben der Abtasteinheit 50 auch die Dosiereinheit 30 sowie eine Positionseinheit 20.

Die Positionseinheit 20 erfasst während der längs der Markierung erfolgenden Bewegung die Lage der Vorrichtung 100 und leitet einen Messwert der Lage an die Steuer- und Auswerteeinheit 10 weiter. Die Positionseinheit 20 enthält dazu eine Positionsscheibe 21, die in Kontakt mit der Walze 33 steht. Durch eine Drehung der Walze 33 wird auch eine entsprechende Drehung der Positionsscheibe 21 hervorgerufen, die ihrerseits durch eine Positionserfassungseinheit 22 erfasst und an die Steuer- und Auswerteeinheit 10 weitergeleitet wird.

Ein durch die Abtasteinheit 50 bestimmter Abtastort 59 befindet sich in Bezug auf die Hinrichtung R1 vor einem durch die Dosiereinheit 30 bestimmten Zuführort 34, an dem der Detektorstoff 310 die Dosiereinheit 30 verlässt, um mit dem Markierungsstoff 320 in Kontakt zu gelangen. Der Zuführort 34 wird im gezeigten Ausführungsbeispiel durch die Walze 33 bestimmt. Durch diese besondere vorteilhafte Anordnung von Abtastort 59 und Zuführort 34, kann bei einer Bewegung in die Hinrichtung R1 eine erste Abtastmessung durchgeführt werden, noch bevor die Markierung 300 hybridisiert ist und ihr signifikantes fluoreszierendes Verhalten aufweist. Das an Hand dieser ersten Abtastmessung gewonnene Ergebnis wird in der Steuer- und Auswerteeinheit 10 als Referenz hinterlegt. Die Referenz beschreibt im Wesentlichen das Streuverhalten des Untergrunds der Markierung 300, wenn es mit dem Sendelichtsignal L1 bestrahlt wird. Eine gegebenenfalls vorhandene geringe natürliche Fluoreszenz des Untergrunds und der Markierung 300 wird durch die Referenz ebenfalls mit erfasst und bei der folgenden Auswertung weiterer Messergebnisse mit berücksicht.

Nachdem die Vorrichtung 100 komplett in der Hinrichtung R1 über die Markierung 300 hinweg bewegt worden ist, ist sowohl die Referenzmessung als auch das Aufbringen des Detektorstoffes 310 auf die Markierung 300 abgeschlossen. Bei der nun folgenden Bewegung in die Rückwärtsrichtung R2 wird eine zweite Abtastmessung vorgenommen, die diesmal jedoch zu einer Anregung der nunmehr hybridisierten und fluoreszierenden Markierung 300 führt. Im Gegensatz zur ersten Messung enthält das Empfangslichtsignal L2 nun neben dem Anteil, der durch den Untergrund bestimmt ist, auch einen weiteren Anteil, der durch die signifikante Fluoreszenz der Markierung 300 bestimmt ist. Die Trennung dieser beiden Anteile ist normalerweise relativ kompliziert. Bei bekannten Vorrichtungen zur Identifizierung von Fluoreszenzmarkierungen sind deshalb oftmals aufwändige Mechanismen vorgesehen. Die Vorrichtung 100 kommt jedoch ohne komplizierte Komponenten aus, da in der ersten Messung bereits ein Referenzwert für den Anteil der Untergrundstrahlung ermittelt worden ist. Deshalb kann eine Trennung der beiden Anteile des Empfangslichtsignals L2 auf einfache Art und Weise in der Steuer- und Auswerteeinheit 10 vorgenommen werden. Mittels des in der Steuer- und Auswerteeinheit 10 extrahierten Fluoreszenzanteils erfolgt die gewünschte Identifizierung der Markierung 300.

In Figur 2 ist eine Draufsicht auf eine mögliche Ausführungsform einer Markierung 300 dargestellt. Die Markierung 300 hat im Prinzip die Form eines gewöhnlichen Strichcodes, der sich im gezeigten Beispiel aus insgesamt drei Markierungsteilen 301, 302 und 303 zusammensetzt. Im Bereich dieser Markierungsteile 301, 302 und 303 befindet sich auch der Markierungsstoff 320. Nach einer Hybridisierung mit dem Detektorstoff 310 kann also genau in diesen Bereichen signifikantes Fluoreszenzverhalten beobachtet werden.

Das in Figur 2 gezeigte Beispiel der Markierung 300 enthält zusätzlich einen Referenzhintergrund 305, der im Empfangslichtsignal L2 einen charakteristischen Untergrundanteil verursacht, an Hand dessen in der Steuer- und Auswerteeinheit 10 eine Positionsbestimmung vorgenommen werden kann. Hierfür wäre dann keine gesonderte Positionseinheit 20 erforderlich. Der Referenzhintergrund 305 besteht aus einem parallelen Linienmuster, das sich in dem Anteil des Empfangslichtsignals L2, der durch den Untergrund bestimmt ist, als spezifisch periodische Komponente abbildet. Eine Positionsbestimmung kann also bei einer manuellen Bewegung der Vorrichtung 100 über die Markierung 300 sowohl mittels der Positionseinheit 20 als auch mittels des Referenzhintergrundes 305 vorgenommen werden. Anhand der so gewonnen Positionsdaten lassen sich zusätzliche Informationen, beispielsweise über Größe und Lage der Markierungsteile 301, 302 und 303, ableiten und bei Bedarf in der Auswertung mit berücksichtigen.

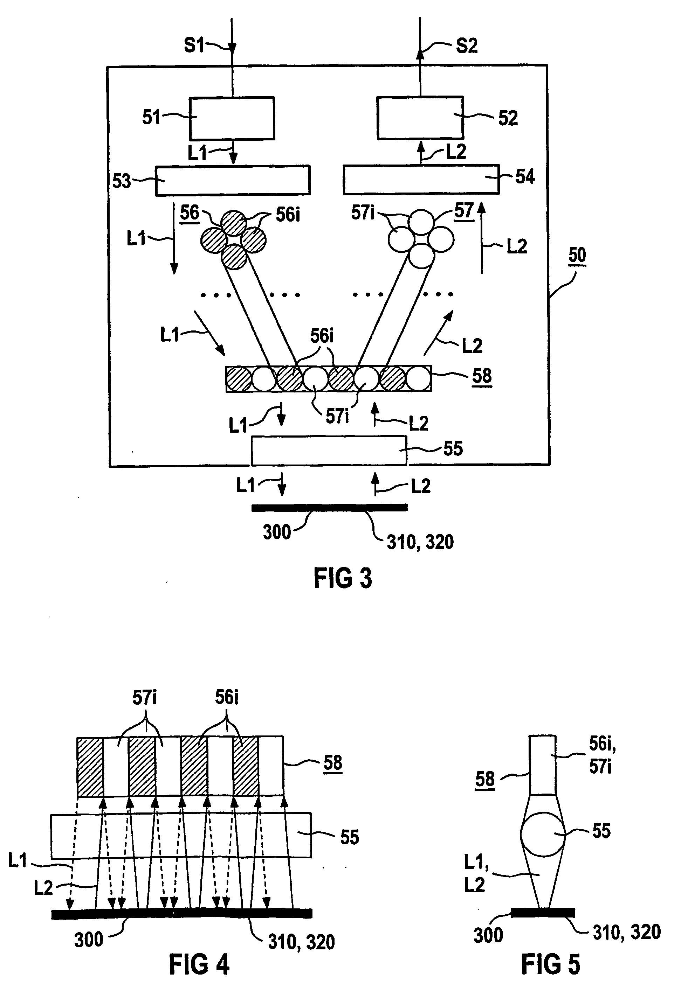

Die Abtasteinheit 50 ist in Figur 3 näher dargestellt. Es handelt es sich hierbei um eine Ausführungsform mit Lichtwellenleiteraufbau. Grundsätzlich ist auch ein Freistrahlaufbau möglich.

Die Abtasteinheit 50 umfasst eine Lichtquelle 51 die nach Erhalt eines Steuersignals S1 von der Steuer- und Auswerteeinheit 10 eine Messung startet, indem sie das Sendelichtsignal L1 emittiert. Über eine erste Linse 53 wird das Sendelichtsignal L1 in ein Sendebündel 56 aus mehreren Sendelichtwellenleitern 56i eingespeist und nach Durchlaufen der Sendelichtwellenleiter 56i über eine weitere Linse 55 in Gestalt einer Stablinse auf die Markierung 300 gerichtet.

Die Markierung 300 hat fluoreszierendes Verhalten, d.h. es liegt eine Hybridisierung zwischen Markierungs- und Detektorstoff 310 bzw. 320 vor. Das Sendelichtsignal L1 regt die fluorophoren Moleküle zur Fluoreszenz an. Die angeregte Fluoreszenzstrahlung bildet neben dem durch eine einfache Reflektion und/oder Streuung des Sendelichtsignal L1 an der Markierung 300 hervorgerufenen ersten Anteil einen zweiten Anteil im Empfangslichtsignal L2, das über die Stablinse 55 in Empfangslichtwellenleiter 57i eingespeist wird.

Das Empfangslichtsignal L2, durchläuft die Empfangslichtwellenleiter 57i in umgekehrter Richtung wie das Sendelichtsignal L1 die Sendelichtwellenleiter 56i. Am von der Markierung 300 abgewandten Ende sind die Empfangslichtwellenleiter 57i zu einem kreisförmigen oder elliptischen Empfangsbündel 57 zusammengefasst. Auch das Sendebündel 56 hat an dem der Lichtquelle 51 zugewandten Ende einen solchen kreisförmigen oder elliptischen Umfang. Diese Bündelform erleichtert eine Ein- oder Auskopplung von Licht in das Bündel 56 bzw. aus dem Bündel 57. Beim Empfangsbündel 57 wird das austretende Empfangslichtsignal L2 mittels einer weiteren Linse 54 auf die empfindliche Detektionsfläche eines Lichtdetektors 52 fokussiert.

Bei Bedarf kann zwischen der Linse 54 und dem Lichtdetektor 52 zusätzlich ein in Figur 3 nicht dargestelltes optisches Filter angeordnet sein, um eine durch Umgebungslicht oder reflektierte Anteile des Sendelichtsignals L1 gegebenenfalls hervorgerufene an sich unerwünschte Lichteinkopplung in den Lichtdetektor 52 weiter zu reduzieren. Im Lichtdetektor 52 wird das Empfangslichtsignal L2 in das elektrische Empfangssignal S2 umgewandelt.

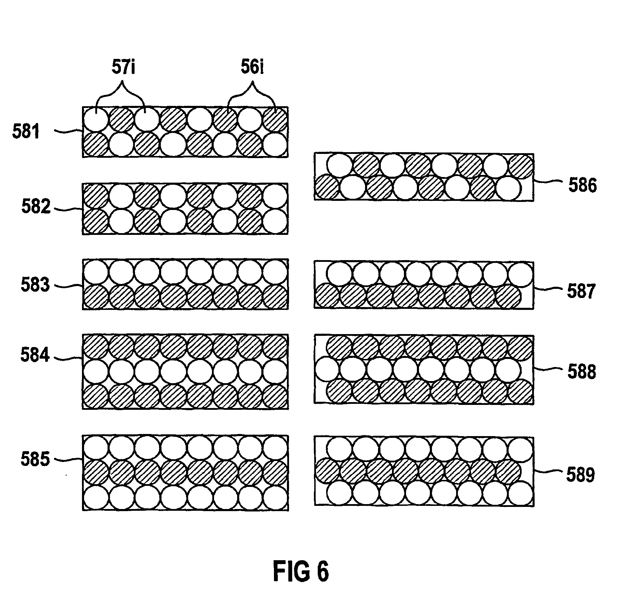

Der Lichtwellenleiteraufbau ermöglicht eine einfache Trennung von Sende- und Empfangslichtsignal L1 bzw. L2. Verglichen mit einer optischen Freistrahlanordnung kann die Realisierung mit den Lichtwellenleitern 56i und 57i außerdem deutlich kleiner aufgebaut werden. Sie ist auch flexibler in Bezug auf die möglichen geometrischen Ausgestaltungen. Ein weiterer Vorteil des Lichtwellenleiteraufbaus liegt darin, dass auf der Markierung 300 in einfacher Weise ein längliches Abtastmuster erzeugt werden kann. Dazu werden die am Ort der Lichtquelle 51 und des Lichtdetektors 52 voneinander getrennten Sendebündel 56 und Empfangsbündel 57 am Ort der Markierung 300 zu einem einzigen Sende/Empfangsbündel 58 zusammengefasst. Im Empfangsbündel 58 sind die Sende- und Empfangslichtwellenleiter 56i bzw. 57i abwechselnd nebeneinander angeordnet. Dadurch ergibt sich eine längliche Aus- und Eintrittsfläche für das Sendelichtsignal L1 bzw. für das Empfangslichtsignal L2. Diese längliche Fläche wird durch die Stablinse 55 auch als längliches Abtastmuster auf der Markierung 300 abgebildet. Der Ausschnitt der Abtasteinheit 50 mit dem zusammengefassten Sende/Empfangsbündel 58 aus den Sende- und Empfangslichtwellenleiter 56i und 57i sowie der fokussierenden Stablinse 55 ist in den Figuren 4 und 5 in den beiden Seitenansichten dargestellt.

Die längliche Form des Abtastmusters ist insbesondere bei einer als Handgerät ausgeführten Vorrichtung 100 von Vorteil. Die manuelle Bewegung der Vorrichtung 100 führt nämlich zwangsläufig zu gewissen Schwankungen, so dass ein kleines punktförmiges Abtastmuster auf Grund dieser unregelmäßigen Handbewegung den Bereich der zu detektierenden Markierungsteile 301, 302 und 303 unbeabsichtigt verlassen könnte. Diese Gefahr besteht bei einem länglichen Abtastmuster nicht. Durch diese einfache Maßnahme lassen sich somit bessere und sicherere Resultate erzielen.

Die Sende- und Empfangslichtwellenleiter 56i bzw. 57i können auch in anderer als der in Figur 3 dargestellten Art und Weise nebeneinander angeordnet sein. Alternative Ausführungsformen von Sende/Empfangsbündeln sind in Figur 6 dargestellt und mit den Bezugszeichen 581 bis 589 gekennzeichnet.

Bei einer weiteren nicht gezeigten Ausführungsform sind im Detektorstoff 320 mindestens zwei verschiedene Typen von fluorophoren Molekülen mit jeweils unterschiedlichen Anregungs- und Fluoreszenz-Wellenlängen vorgesehen. Dadurch lässt sich die Sicherheit vor einer unerwünschten Identifizierung der Markierung 300 ebenso erhöhen wie die Genauigkeit bei der beabsichtigten und auch erlaubten Identifizierung. In diesem Fall werden die Sende- und Empfangslichtwellenleiter 56i und 57i vorzugsweise in weitere Teilbündel unterteilt, die jeweils einen Lichtanteil mit einer der verwendeten Wellenlängen führen. Jeder Anregungs- und Fluoreszenz-Wellenlänge ist dann eines der Teilbündel zugewiesen.

## Patentansprüche

1. Verfahren zum Identifizieren einer an einem Körper (200) angeordneten Markierung (300), die einen Markierungsstoff (320) mit spezifischer Eigenschaft enthält, wobei
a) die Markierung (300) in einer ersten Messung mittels einer Strahlung (L1) abgetastet und daraus eine Referenz ermittelt wird,
b) der Markierungsstoff (320) mit einem Detektorstoff (310) mit zum Markierungsstoff (320) korrespondierender spezifischer Eigenschaft in Kontakt gebracht wird, so dass eine aufgrund der korrespondierenden spezifischen Eigenschaften resultierende Verbindung aus Markierungs- und Detektorstoff (320, 310) fluoreszierendes Verhalten aufweist,
c) die Markierung (300) in einer zweiten Messung mittels der Strahlung (L1) abgetastet wird und
d) die Markierung (300) mittels der Referenz und dem Ergebnis der zweiten Messung identifiziert wird.

2. Verfahren nach Anspruch 1, bei dem die erste Messung, das Inkontaktbringen, und die zweite Messung in unmittelbarer zeitlicher Abfolge durchgeführt werden.

3. Verfahren nach Anspruch 1 oder 2, bei dem zur ersten und zweiten Messung und zum Inkontaktbringen eine Vorrichtung (100) über die Markierung (300) hinweg bewegt wird.

4. Verfahren nach Anspruch 3, bei dem die Vorrichtung (100) manuell bewegt wird.

5. Verfahren nach Anspruch 3 oder 4, bei dem die Vorrichtung (100) zunächst in einer Hinrichtung (R1) und dann in einer Rückrichtung (R2) über die Markierung (300) hinweg bewegt wird.

6. Verfahren nach Anspruch 5, bei dem die erste Messung während der Bewegung in Hinrichtung (R1) durchgeführt wird.

7. Verfahren nach Anspruch 5 oder 6, bei dem das Inkontaktbringen während der Bewegung in Hinrichtung (R1) durchgeführt wird.

8. Verfahren nach einem der Ansprüche 5 bis 7, bei dem die zweite Messung während der Bewegung in Rückrichtung (R2) durchgeführt wird.

9. Verfahren nach einem der Ansprüche 3 bis 8, bei dem die Vorrichtung (100) während der Bewegung in direkten Kontakt mit der Markierung (300) gebracht wird.

10. Verfahren nach einem der Ansprüche 3 bis 9, bei dem eine Position der Vorrichtung (100) während der Bewegung erfasst wird.

11. Verfahren nach einem der vorhergehenden Ansprüche, bei dem als Detektorstoff (310) und Markierungsstoff (320) eine erste bzw. eine zweite Nukleotidsequenz verwendet wird.

12. Verfahren nach einem der vorhergehenden Ansprüche, bei dem ein Detektorstoff (310) mit einem fluorophoren Bestandteil verwendet wird.

13. Verfahren nach einem der vorhergehenden Ansprüche, bei dem das fluoreszierende Verhalten der Markierung (300) vor dem Inkontaktbringen des Markierungsstoffs (320) mit dem Detektorstoff (310) anhand der ersten Messung ausgewertet wird.

14. Vorrichtung zum Identifizieren einer an einem Körper (200) angeordneten Markierung (300), die einen Markierungsstoff (320) mit spezifischer Eigenschaft enthält, umfassend mindestens
a) eine Abtasteinheit (50) zur Messung der Markierung (300) mittels einer Strahlung (L1),
b) eine mit einem Detektorstoff (310) befüllbare Dosiereinheit (30), die ausgelegt ist, den Detektorstoff (310) in Kontakt mit dem Markierungsstoff (320) zu bringen, wobei der Detektorstoff (310) eine zum Markierungsstoff (320) korrespondierende spezifische Eigenschaft hat und eine aufgrund der korrespondierenden spezifischen Eigenschaften resultierende Verbindung aus Markierungs- und Detektorstoff (320, 310) fluoreszierendes Verhalten aufweist, und
c) eine Steuer- und Auswerteeinheit (10),
wobei die Abtasteinheit (50), die Dosiereinheit (30) und die Steuer- und Auswerteeinheit (10) ausgelegt sind zur sequentiellen Durchführung
d) einer ersten Messung der Markierung (300) sowie einer daraus abgeleiteten Ermittlung einer Referenz,
e) des Inkontaktbringens von Markierungsstoff (320) und Detektorstoff (310),
f) einer zweiten Messung der Markierung (300) und
g) einer Identifizierung der Markierung (300) anhand der Referenz und des Ergebnisses der zweiten Messung.

15. Vorrichtung nach Anspruch 14, bei der ein durch die Abtasteinheit (50) bestimmter Abtastort (59) in Bezug auf eine Hinrichtung (R1) einer über die Markierung (300) hinweg erfolgenden Bewegung vor einem durch die Dosiereinheit (30) bestimmten Zuführort (34), an dem der Detektorstoff (310) die Dosiereinheit (30) verlässt, um mit dem Markierungsstoff (320) in Kontakt zu gelangen, gelegen ist.

16. Vorrichtung nach Anspruch 14 oder 15, bei der die Dosiereinheit (30) eine Walze (33) aufweist, mittels der der Detektorstoff (310) dem Markierungsstoff (320) zuführbar ist.

17. Vorrichtung nach Anspruch 14 oder 15, welche ausgelegt ist zu einer über die Markierung (300) hinweg erfolgenden Bewegung.

18. Vorrichtung nach Anspruch 17, welche ausgelegt ist zu einer manuell geführten Bewegung.

19. Vorrichtung nach einem der Ansprüche 16 bis 18, die mittels einer Rollbewegung der Walze (33) über die Markierung (300) hinweg bewegbar ist.

20. Vorrichtung nach einem der Ansprüche 14 bis 19, welche ausgelegt ist zur Durchführung der ersten Messung während einer in einer Hinrichtung (R1) über die Markierung (300) hinweg erfolgenden Bewegung.

21. Vorrichtung nach einem der Ansprüche 14 bis 20, welche ausgelegt ist zur Durchführung des Inkontaktbringens des Detektorstoffs (310) mit dem Markierungsstoff (320) während einer in einer Hinrichtung (R1) über die Markierung (300) hinweg erfolgenden Bewegung.

22. Vorrichtung nach einem der Ansprüche 14 bis 21, welche ausgelegt ist zur Durchführung der zweiten Messung während einer in einer Rückrichtung (R2) über die Markierung (300) hinweg erfolgenden Bewegung.

23. Vorrichtung nach Anspruch 14 bis 22, bei der eine Positionseinheit (20) zur Positionserfassung während einer über die Markierung (300) hinweg erfolgenden Bewegung vorgesehen ist.

24. Vorrichtung nach Anspruch 14 bis 23, bei der die Abtasteinheit (50) ausgelegt ist, an einem Abtastort (59) auf der Markierung (300) ein Strahlungsmuster, insbesondere in Form eines Linien- oder Punktmusters vorzugsweise mit einem länglichen Umriss, zu erzeugen.

25. Vorrichtung nach einem der Ansprüche 14 bis 24, bei der die Abtasteinheit (50) zuführende und abführende Wellenleiter (56i, 57i) für die Strahlung (L1, L2) umfasst und die Wellenleiter (56i, 57i)nebeneinander angeordnet sind, so dass sie an dem der Markierung (300) zugewandten Ende innerhalb eines länglichen Umrisses angeordnet sind.

26. Vorrichtung nach Anspruch 25, bei der die zu- und abführenden Wellenleiter (56i, 57i) zyklisch alternierend nebeneinander angeordnet sind.

27. Vorrichtung nach Anspruch 25 oder 26, bei der die zu- und abführenden Wellenleiter (56i, 57i) zu mindestens zwei Teilbündeln (56, 57) gruppiert sind.

28. Vorrichtung nach Anspruch 27, bei der die Teilbündel (56, 57) zur Führung von Strahlung (L1, L2) mit unterschiedlicher Wellenlänge bestimmt sind.

29. Vorrichtung nach einem der Ansprüche 14 bis 28, bei der die Dosiereinheit (30) mit einem eine erste Nukleotidsequenz umfassenden Detektorstoff (310) befüllbar ist und die erste Nukleotidsequenz eine korrespondierende Eigenschaft zu einer zweiten Nukleotidsequenz hat, aus der der Markierungsstoff (320) gebildet ist.

30. Vorrichtung nach einem der Ansprüche 14 bis 29, bei der die Dosiereinheit (30) mit einem Detektorstoff (310) befüllbar ist, der einen fluorophoren Bestandteil hat.

## Claims

1. Method for identifying a marking (300) which is arranged on a body (200) and contains a marking substance (320) with a specific property, wherein
a) the marking (300) is scanned by means of radiation (L1) in a first measurement and a reference is determined therefrom,
b) the marking substance (320) is brought into contact with a detector substance (310) having a specific property corresponding to the marking substance (320), so that a combination of the marking and detector substances (320, 310) which results because of the corresponding specific properties exhibits fluorescent behaviour
c) the marking (300) is scanned by means of the radiation (L1) in a second measurement
d) the marking (300) is identified by means of the reference and the result in the second measurement.

2. Method according to Claim 1, in which the first measurement is carried out, the contact is brought about, and the second measurement is carried out in chronological succession.

3. Method according to Claim 1 or 2, in which a device (100) is moved across the marking (300) for the first and second measurement and for bringing about the contact.

4. Method according to Claim 3, in which the device (100) is moved manually.

5. Method according to Claim 3 or 4, in which the device (100) is moved across the marking (300) first in a forward direction (R1) and then in a backward direction (R2).

6. Method according to Claim 5, in which the first measurement is carried out during the movement in the forward direction (R1).

7. Method according to Claim 5 or 6, in which the contact is brought about during the movement in the forward direction (R1).

8. Method according to one of Claims 5 to 7, in which the second measurement is carried out during the movement in the backward direction (R2).

9. Method according to one of Claims 3 to 8, in which the device (100) is brought into direct contact with the marking (300) during the movement.

10. Method according to one of Claims 3 to 9, in which a position of the device (100) is recorded during the movement.

11. Method according to one of the preceding claims, in which a first and a second nucleotide sequence are respectively used as the detector substance (310) and the marking substance (320).

12. Method according to one of the preceding claims, in which a detector substance (310) having a fluorophore component is used.

13. Method according to one of the preceding claims, in which the fluorescent behaviour of the marking (300) is evaluated with the aid of the first measurement before the marking substance (320) is brought into contact with the detector substance (310).

14. Device for identifying a marking (300) which is arranged on a body (200) and contains a marking substance (320) with a specific property, comprising at least
a) a scanning unit (50) for measuring the marking (300) by means of radiation (L1) b)a dosing unit (30) which can be filled with a detector substance (310) and is designed to bring the detector substance (310) into contact with the marking substance (320), wherein the detector substance (310) has a specific property corresponding to the marking substance (320) and a combination of the marking and detector substances (320, 310) which results because of the corresponding specific properties exhibiting fluorescent behaviour, and
c) a control and evaluation unit (10), wherein the scanning unit (50), the dosing unit (30) and the control and evaluation unit (10) are designed for sequentially
d) carrying out a first measurement of the marking (300) and a determination, derived therefrom, of a reference,
e) bringing the marking substance (320) and the detector substance (310) into contact
f) carrying out a second measurement of the marking (300), and
g) carrying out identification of the marking (300) with the aid of the reference and the result of the second measurement.

15. Device according to Claim 14, in which a scanning position (59) determined by the scanning unit (50) is placed, in relation to a forward direction (R1) of a movement taking place across the marking (300), in front of a delivery position (34), which is determined by the dosing unit (30) and at which the detector substance (310) leaves the dosing unit (30) in order to enter into contact with the marking substance (320).

16. Device according to Claim 14 or 15, in which the dosing unit (30) has a roller (33), by means of which the detector substance (310) can be delivered to the marking substance (320).

17. Device according to Claim 14 or 15, which is designed for a movement taking place across the marking (300).

18. Device according to Claim 17, which is designed for a manually performed movement.

19. Device according to one of Claims 16 to 18, which can be moved to and fro by means of a rolling movement of the roller (33) across the marking (300).

20. Device according to one of Claims 14 to 19, which is designed for carrying out the first measurement during a movement taking place across the marking (300) in a forward direction (R1).

21. Device according to one of Claims 14 to 20, which is designed for bringing the detector substance (310) into contact with the marking substance (320) during a movement taking place across the marking (300) in a forward direction (R1).

22. Device according to one of Claims 14 to 21, which is designed for carrying out the second measurement during a movement taking place across the marking (300) in a backward direction (R2).

23. Device according to one of Claims 14 to 22, in which positioning unit (20) is provided for recording positions during a movement taking place across the marking (300).

24. Device according to one of Claims 14 to 23, in which the scanning unit (50) is designed to generate a radiation pattern at a scanning position (59) on the marking (300), especially one in the form of a line pattern or point pattern advantageously with an elongate outline.

25. Device according to one of Claims 14 to 24, in which the scanning unit (50) comprises input and output waveguides (56i,57i) for the radiation (L1, L2) and the waveguides (56i,57i) are arranged next to one another so that they are arranged inside an elongate outline at the end facing the marking (300).

26. Device according to Claim 25, in which the input and output waveguides (56i, 57i) are arranged next to one another in cyclic alternation.

27. Device according to Claim 25 or 26, in which the input and output waveguides (56i, 57i) are grouped in at least two sub-bundles.

28. Device according to Claim 27, in which the sub-bundles (56, 57) are intended for supplying radiation (L1, L2) with different wavelengths.

29. Device according to one of Claims 14 to 28, in which the dosing unit (30) can be filled with a detector substance (310) comprising a first nucleotide sequence, and the first nucleotide sequence has a property corresponding to a second nucleotide sequence from which the marking substance (320) is formed.

30. Device according to one of Claims 14 to 29, in which the dosing unit (30) can be filled with a detector substance (310) which has a fluorophore component.

## Revendications

1. Procédé d'identification d'un marquage (300) qui est apposé sur une pièce (200) et qui contient une substance (320) de marquage ayant une propriété spécifique, dans lequel
a) on balaie le marquage (300) dans une première mesure au moyen d'un rayonnement (L1) et on en détermine une référence,
b) on met la substance (320) de marquage en contact avec une substance (310) de détection ayant une propriété spécifique correspondant à la substance (320) de marquage, de manière à ce qu'un composé de la substance (320) de marquage et de la substance (310) de détection ait, en raison des propriétés spécifiques correspondantes, un comportement fluorescent,
c) on balaie le marquage (300) dans une deuxième mesure au moyen du rayonnement (L1) et
d) on identifie le marquage (300) au moyen de la référence et du résultat de la deuxième mesure.

2. Procédé suivant la revendication 1, dans lequel on effectue la première mesure, la mise en contact et la deuxième mesure en succession immédiate dans le temps.

3. Procédé suivant la revendication 1 ou 2, dans lequel on déplace pour la première et la deuxième mesure et pour la mise en contact un dispositif (100) au-dessus du marquage (300).

4. Procédé suivant la revendication 3, dans lequel on déplace manuellement le dispositif (100).

5. Procédé suivant la revendication 3 ou 4, dans lequel on déplace le dispositif (100) d'abord dans une direction (R1) aller, puis dans une direction (R2) retour au-dessus du marquage (300).

6. Procédé suivant la revendication 5, dans lequel on effectue la première mesure pendant le déplacement dans la direction (R1) aller.

7. Procédé suivant la revendication 5 ou 6, dans lequel on effectue la mise en contact pendant le déplacement dans la direction (R1) aller.

8. Procédé suivant l'une des revendications 5 à 7, dans lequel on effectue la deuxième mesure pendant le déplacement dans la direction (R2) retour.

9. Procédé suivant l'une des revendications 3 à 8, dans lequel on met le dispositif (100) pendant le déplacement en contact direct avec le marquage (300).

10. Procédé suivant l'une des revendications 3 à 9, dans lequel on relève une position du dispositif (100) pendant le déplacement.

11. Procédé suivant l'une des revendications précédentes, dans lequel o n utilise comme substance (310) de détection et comme substance (320) de marquage une première et une deuxième séquence de nucléotides.

12. Procédé suivant l'une des revendications précédentes, dans lequel on utilise une substance (310) de détecteur ayant un constituant fluorogène.

13. Procédé suivant l'une des revendications précédentes, dans lequel on évalue le comportement fluorescent du marquage (300) avant la mise en contact de la substance (320) de marquage avec la substance (310) de détection au moyen de la première mesure.

14. Dispositif d'identification d'un marquage (300) disposé sur une pièce (200), qui contient une substance (320) de marquage à propriété spécifique, comprenant au moins
a) une unité (50) de balayage pour mesurer le marquage (300) au moyen d'un rayonnement (L1),
b) une unité (30) d'addition dosée qui peut être emplie d'une substance (310) de détection et qui est conçue pour mettre la substance (310) de détection en contact avec la substance (320) de marquage, la substance (310) de détection ayant une propriété spécifique correspondant à la substance (320) de marquage et ayant un comportement fluorescent sur la base du composé constitué de la substance (320) de marquage et de la substance (310) de détection provenant des propriétés spécifiques correspondantes et
c) une unité (10) de commande et d'exploitation,
dans lequel l'unité (50) de balayage, l'unité (30) d'addition dosée et l'unité (10) de commande et d'exploitation sont conçues pour effectuer séquentiellement
d) une première mesure du marquage (300) ainsi qu'une détermination qui en dérive d'une référence,
e) la mise en contact de la substance (320) de marquage et la substance (310) de détection,
f) une deuxième mesure du marquage (300) et
g) une identification du marquage (300) au moyen de la référence et du résultat de la deuxième mesure.

15. Dispositif suivant la revendication 14, dans lequel un emplacement (59) de balayage déterminé par l'unité (50) de balayage est placé par rapport à une direction (R1) aller d'un déplacement s'effectuant au-dessus du marquage (300) en amont d'un emplacement (34) d'apport déterminé par l'unité (30) d'addition dosée où la substance (310) de détection quitte l'unité (30) d'addition dosée et vient en contact avec la substance (320) de marquage.

16. Dispositif suivant la revendication 14 ou 15, dans lequel l'unité (30) d'addition dosée a un rouleau (33) au moyen duquel la substance (310) de détection peut être apportée à la substance (320) de marquage.

17. Dispositif suivant la revendication 14 ou 15, qui est conçu pour un déplacement s'effectuant au-dessus du marquage.

18. Dispositif suivant la revendication 17, qui est conçu pour un déplacement effectué manuellement.

19. Dispositif suivant l'une des revendications 16 à 18, qui peut être déplacé au-dessus du marquage (300) au moyen d'un mouvement de roulement du rouleau (33).

20. Dispositif suivant l'une des revendications 14 à 19, qui est conçu pour effectuer la première mesure pendant un déplacement s'effectuant dans une direction (R1) aller au-dessus du marquage (300).

21. Dispositif suivant l'une des revendications 14 à 20, qui est conçu pour effectuer la mise en contact de la substance (310) de détection avec la substance (320) de marquage pendant un déplacement s'effectuant dans une direction (R1) aller au-dessus du marquage (300).

22. Dispositif suivant l'une des revendications 14 à 21, qui est conçu pour effectuer la deuxième mesure pendant un déplacement s'effectuant dans une direction (R2) retour au-dessus du marquage (300).

23. Dispositif suivant l'une des revendications 14 à 22, dans lequel il est prévu une unité (20) de détection de position pendant un déplacement s'effectuant au-dessus du marquage (300).

24. Dispositif suivant l'une des revendications 14 à 23, dans lequel l'unité (50) de balayage est conçue pour produire en un emplacement (59) de balayage sur le marquage (300) un modèle de rayonnement, notamment sous la forme d'un modèle de lignes ou de points ayant, de préférence, un contour oblong.

25. Dispositif suivant l'une des revendications 14 à 24, dans lequel l'unité (50) de balayage comprend des guides d'ondes (56i, 57i) arrivant et partant pour le rayonnement (L1, L2) et les guides d'ondes (56i, 57i) sont disposés côte à côte, de manière à être disposés à l'intérieur d'un contour oblong à l'extrémité tournée vers le marquage (300).

26. Dispositif suivant la revendication 27, dans lequel les guides d'ondes (56i, 57i) arrivant et partant sont disposés côte à côte cycliquement en alternance.

27. Dispositif suivant la revendication 25 ou 26, dans lequel les guides d'ondes (56i, 57i) arrivant et partant sont groupés en au moins deux sous-faisceaux (56, 57).

28. Dispositif suivant la revendication 27, dans lequel les sous-faisceaux (56, 57) sont destinés à guider du rayonnement (L1, L2) de longueurs d'ondes différentes.

29. Dispositif suivant l'une des revendications 14 à 28, dans lequel l'unité (30) d'addition dosée peut être emplie d'une substance (310) de détection comprenant une première séquence de nucléotides et la première séquence de nucléotides a une propriété correspondante à une deuxième séquence de nucléotides en laquelle la substance (320) de marquage est formée.

30. Dispositif suivant l'une des revendications 14 à 29, dans lequel l'unité (30) d'addition dosée peut être emplie d'une substance (310) de détection, qui a un constituant fluorogène.
